# EUROPÄISCHE PATENTSCHRIFT

(11) **EP 0 687 604 B1**
(45) Veröffentlichungstag und Bekanntmachung des Hinweises auf die Patenterteilung: **11.12.2002**
(21) Anmeldenummer: 95107834.4
(22) Anmeldetag: 23.05.1995
(51) Int. Cl.: B60T 7/12, B60T 8/32, F16H 63/48

(54) **Verfahren zum Betreiben eines Fahrzeuges, insbesondere während des Anfahrvorganges und Anfahrhilfsvorrichtung**
Method for controlling a vehicle, especially during its start and start auxiliary device
Procédé de commande d'un véhicule, en particulier pendant le démarrage et dispositif d'aide au démarrage

(30) Priorität: 16.06.1994 DE 4421088
(43) Veröffentlichungstag der Anmeldung: 20.12.1995
(73) Patentinhaber: Voith Turbo GmbH & Co. KG, 89522 Heidenheim (DE)
(72) Erfinder: Bek, Manfred, D-89520 Heidenheim (DE); Häberle, Friedrich, D-89518 Heidenheim (DE)
(74) Vertreter: Dr. Weitzel & Partner

(56) Entgegenhaltungen:
- WO-A-95/11148
- DE-A- 4 236 240
- DE-A- 4 332 459
- FR-A- 2 691 934
- US-A- 4 561 527
- US-A- 5 370 449

## Beschreibung

Die Erfindung betrifft ein Verfahren zum Betreiben eines Fahrzeuges mit einem Betriebsbremssystem, einer Feststellbremseinrichtung und einem Automatgetriebe, insbesondere während des Anfahrvorganges, im einzelnen mit den Merkmalen aus dem Oberbegriff des Anspruchs 1; ferner eine Anfahrhilfsvorrichtung für Fahrzeuge mit Feststellbremseinrichtung und Automatgetriebe, im einzelnen mit den Merkmalen aus dem Oberbegriff des Anspruchs 7.

Fahrzeuge mit Automatgetriebe werden vorwiegend im Nutzkraftfahrzeugbereich sowie bei Bussen eingesetzt. Zur Vermeidung des Rückrollens des Fahrzeuges sowie einer Überbeanspruchung der an den Rädern wirksam werdenden Bremselemente wird bei den bisherigen Ausführungen bei betätigtem Bremspedal oder bei betätigter Feststellbremseinrichtung und nicht betätigtem Fahrpedal und Unterschreitung einer sehr kleinen Fahrgeschwindigkeit von einem elektrischen Steuergerät eine Blockierung des Automatgetriebes durchgeführt. Zur Verbrauchsreduzierung wird gleichfalls die Eingangskupplung des Automatgetriebes geöffnet (sogenannte EK-Abschaltung). Beim Anfahren des Fahrzeuges wird zur Überbrückung der Zeit, in der die letzte Fahrzeugbremse (Betriebsbremse oder Feststellbremse) geöffnet wurde, bis zum vollständigen Schließen der Eingangskupplung die Getriebeblockierung als Rückrollsicherung und Anfahrhilfe aufrechterhalten. Die Getriebeblockierung wird in der Regel durch das Zuschalten von Lamellenbremsen an einzelnen Getriebeelementen realisiert. Durch das gleichzeitige Schließen bzw. Öffnen von Kupplungen und den Bremselementen im Getriebe sind zum Erreichen eines guten Anfahrkomforts aufwendige Abstimmungsarbeiten für jedes einzelne Fahrzeug notwendig. In der Serienproduktion besteht jedoch keine Möglichkeit, diese Abstimmungsarbeiten für jedes einzelne Fahrzeug durchzuführen, was sich in einer Verschlechterung des Fahrkomforts insbesondere dem Auftreten von starken Schaltstößen widerspiegelt. Des weiteren tritt bei der Realisierung der Abstimmung von Getriebeblockierung sowie dem Öffnen der Kupplungen das Problem auf, daß kein vernünftiger Kompromiß gefunden werden kann, der sowohl das Anfahren am Berg ohne Rückrollen des Fahrzeuges als auch das schnelle Anfahren in der Ebene ermöglicht. Die Rückrollsicherung bewirkt beim Anfahren in der Ebene das sogenannte "Kleben des Fahrzeuges".

Eine Möglichkeit der Lösung des Problems eines unbeabsichtigten Zurückrollens eines Fahrzeuges nach Lösung einer Feststellbremseinrichtung ist der Druckschrift US-PS 4,561,527 zu entnehmen. Bei dieser besteht zusätzlich zur manuellen Betätigung der Feststellbremseinrichtung auch die Möglichkeit, auf eine automatische Betätigung umzuschalten. Dazu wird eine Drehzahl für die Antriebsmaschine in Abhängigkeit des Neigungswinkels ermittelt, welche bei Freigabe der Feststellbremseinrichtung vorliegen muß, damit ein Zurückrollen verhindert wird. Diese Motordrehzahl wird überwacht und bei Erreichen beziehungsweise Überschreitung dieser eine entsprechende Freigabegeschwindigkeit für die Feststellbremseinrichtung durch Vorgabe einer entsprechenden Drehzahl für die Antriebseinrichtung zur Freigabe der Feststellbremseinrichtung ausgegeben. Hier erfolgt die Freigabe immer in Abhängigkeit von der Neigung der Steigung, an welcher das Fahrzeug vor dem Zurückrollen oder vor dem Hinabrollen gehindert werden soll.

Der Erfindung liegt deshalb die Aufgabe zugrunde, ein Verfahren zum Betreiben eines Fahrzeuges, insbesondere während des Anfahrvorganges sowie eine Anfahrhilfsvorrichtung derart zu gestalten und weiterzuentwickeln, daß die genannten Nachteile vermieden werden. Aufwendige Abstimmungsarbeiten für jedes einzelne Fahrzeug sowie das Auftreten von Schaltstößen sollen dabei minimiert werden. Des weiteren soll die Anfahrhilfsvorrichtung derart konzipiert werden, daß eine nachteilige Beeinflussung des Anfahrvorganges in der Ebene ausgeschlossen ist.

Die erfindungsgemäße Lösung der Aufgabe ist durch die kennzeichnenden Merkmale des Anspruchs 1 sowie des Anspruchs 7 charakterisiert. Vorteilhafte Ausführungsmöglichkeiten sind in den Unteransprüchen wiedergegeben.

Erfindungsgemäß wird bei Fahrzeugen mit einer Betriebsbremseinrichtung, einer Feststellbremseinrichtung und einem Automatgetriebe als Rückrollsicherung und Anfahrhilfe nicht mehr eine Getriebeblockierung herbeigeführt, sondern es wird von einem Steuergerät die Feststellbremse des Fahrzeuges automatisch bei Vorliegen bestimmter Bedingungen bzw. bestimmter Eingangssignale am Steuergerät angesteuert. Die Feststellbremseinrichtung wird bei gemeinsamen Vorliegen folgender drei Bedingungen über das Steuergerät automatisch angesteuert:
1. die Fahrgeschwindigkeit ist sehr klein (nahezu Stillstand), und
2. die Betriebsbremseinrichtung oder die Feststellbremseinrichtung ist vom Fahrer betätigt, und
3. das Fahrpedal befindet sich in Nullstellung.

In diesem Zustand, d.h. der Aktivierung der Feststellbremseinrichtung mittels dem Steuergerät, können Maßnahmen zur Verbrauchsreduzierung im Stillstand des Fahrzeuges durchgeführt werden. Dazu gehören beispielsweise das Öffnen der Eingangskupplung des Automatgetriebes oder ein Absenken des Wandlerdruckes.
Bei Fehlen einer der drei Bedingungen wird die Feststellbremseinrichtung automatisch deaktiviert. Ein Rückrollen des Fahrzeuges während der zum Aufheben der Maßnahmen zur Verbrauchsreduzierung benötigten Zeit wird sicher verhindert, wenn zwischen dem Öffnen der letzten Bremse, die durch den Fahrer betätigt worden ist, und der automatischen Deaktivierung der Feststellbremseinrichtung eine gewisse Verzögerung vorgesehen ist. Diese Verzögerungszeit wird sehr kurz gewählt, vorzugsweise beträgt diese ca. 0,2 bis 2 Sekunden, und ist deshalb im Fahrbetrieb kaum spürbar.

Die erfindungsgemäße Umsetzung in einer Vorrichtung ist durch die kennzeichnenden Merkmale des Anspruchs 7 charakterisiert. Die Feststellbremseinrichtung ist in der Regel mittels Hand- oder Fußbetätigung durch den Fahrer aktivierbar. Dazu ist beispielsweise ein Hebel am Armaturenbrett des Fahrzeuges vorgesehen. An diesem Hebel gibt der Fahrer eine Stellgröße vor, die am Stellglied wirksam wird. Als Stellglieder fungieren in der Regel Magnetventile, die mit den Bremszylindern an den einzelnen Rädern gekoppelt sind. Erfindungsgemäß ist ein Ausgang Steuergerätes ebenfalls mit dem Stellglied koppelbar. Vorzugsweise wird diese Kopplung über einen Parallelkontakt zum Hebel bzw. Schalter für die Feststellbremseinrichtung am Armaturenbrett realisiert. Dieser Parallelkontakt wird vom Steuergerät nur unter den bereits genannten Voraussetzungen aktiviert. Am Steuergerät sind dazu wenigstens vier Eingänge erforderlich, über die die entsprechenden Signale dem Steuergerät zugeführt und von diesem verarbeitet werden können. Ein erster Eingang ist dabei mit der Einrichtung zur Vorgabe der Stellgröße für die Feststellbremseinrichtung, beispielsweise dem Handhebel am Armaturenbrett für die Feststellbremseinrichtung, gekoppelt. Ein zweiter Eingang des Steuergerätes ist mit einer Meßeinrichtung, die ständig die aktuelle Ist-Geschwindigkeit des Fahrzeuges erfaßt, gekoppelt. Der dritte Eingang ist mit der Betriebsbremseinrichtung und der vierte mit dem Fahrpedal gekoppelt. Über diese vier Eingänge werden dem Steuergerät Signale über die Betätigung von Feststellbremseinrichtung, Betriebsbremseinrichtung, Fahrpedal und die aktuelle Ist-Geschwindigkeit zugeführt und verarbeitet. Bei Erfüllung der zur automatischen Aktivierung der Feststellbremseinrichtung bereits genannten Bedingungen gibt das Steuergerät eine Ausgangsgröße als Stellgröße für das Stellglied der Feststellbremseinrichtung aus. Die Ausgangsgröße kann jedoch auch ein Schaltsignal zur Aktivierung eines Parallelkontaktes zum Schalter bzw. Hebel am Armaturenbrett für die Feststellbremseinrichtung sein.

Eine Deaktivierung der automatischen Zuschaltung der Feststellbremseinrichtung mittels dem Steuergerät erfolgt bei Fehlen einer der drei genannten Voraussetzungen. Eine Deaktivierung kann dabei bei einer höheren Fahrgeschwindigkeit, beispielsweise > ca. 2 km/h oder beim Öffnen der letzten Bremse des Fahrzeuges durch den Fahrer, d.h. vom Fahrer müssen alle von ihm zu betätigenden Bremsen geöffnet worden sein, oder bei Betätigung des Fahrpedals, in der Regel dem Gaspedal, erfolgen.

Vorzugsweise wird aus Gründen der Rationalisierung als Steuergerät das Steuergerät des Automatgetriebes genutzt, d.h. die Aufgaben des Steuergerätes werden auf das Steuergerät des Automatgetriebes übertragen, was zu diesem Zweck weitere zusätzliche Ein- und Ausgänge aufweisen muß. Dies bietet erhebliche Vorteile in Bezug auf den Platzbedarf sowie der Schaffung möglicher Schnittstellen zwischen der Automatgetriebesteuerung einerseits und der Ansteuerung der Feststellbremseinrichtung andererseits. Eine aufwendig zu realisierende Kopplung sowie Abstimmung zwischen den ansonsten einzeln vorliegenden Steuergeräten kann entfallen. Besonders deutlich wird dies bei zusätzlich vorzusehenden Maßnahmen zur Verbrauchsreduzierung, beispielsweise der Öffnung der Eingangskupplung des Automatgetriebes oder der Absenkung des Wandlerdruckes.

Die erfindungsgemäße Lösung der Aufgabe ist nachfolgend anhand einer Figur erläutert. Eine Feststellbremseinrichtung 1 umfaßt als Stellglied 2 beispielsweise ein Magnetventil, das, hier im einzelnen jedoch nicht dargestellt, mit an den einzelnen Rädern wirksam werdenden Bremszylindern gekoppelt ist. Diese Kopplung wird durch eine mit einem Pfeil versehene Verbindungsleitung 3 angedeutet. Die Vorgabe der Stellgröße für die Betätigung des Stellgliedes erfolgt beispielsweise über einen Handhebel 4, der am hier nicht dargestellten Armaturenbrett des Fahrzeuges angeordnet sein kann. Der Handhebel 4 wird vom Fahrer per Hand betätigt und stellt somit über einen Schalter 5 die Verbindung zum Stellglied 2 her. Der Handhebel 4 ist über eine, hier nur strichpunktiert dargestellte, Leitung 6 mit einem elektronischen Steuergerät 7 gekoppelt. Das Steuergerät 7 weist wenigstens noch drei weitere Eingänge 8, 9, 10 auf. Am Eingang 8 liegt ein Signal von der Betriebsbremseinrichtung BE an. Dem Eingang 9 wird ein Signal vom Fahrpedal FP und dem Eingang 10 ein Signal von einer Meßeinrichtung zur Ermittlung der aktuellen Ist-Geschwindigkeit vᵢₛₜ zugeführt. Das elektronische Steuergerät 7 bzw. die Steuerung verarbeitet diese Signale und bildet in Abhängigkeit von diesen Signalen ein Ausgangssignal, das am Ausgang 11 des Steuergerätes 7 ausgegeben wird. Der Ausgang 11 des Steuergerätes 7 ist mit einem zum Schalter 4 am Armaturenbrett parallel angeordneten Kontakt 12 gekoppelt. Das am Ausgang 11 vorliegende Ausgangssignal bewirkt entweder ein Schließen des Parallelkontaktes 12 und damit eine Aktivierung der Feststellbremseinrichtung 1 oder ein Öffnen bzw. ein Offenbleiben des Kontaktes 12. In dieser Darstellung ist der Parallelkontakt 12 geöffnet. Ein Schließen des Parallelkontaktes 12 und damit eine Aktivierung der Feststellbremseinrichtung 1 wird nur bei Vorliegen folgender Eingangssignale am Steuergerät 7 erzielt:
1. die Betriebsbremseinrichtung ist betätigt, beispielsweise durch Drücken des Fußbremspedals durch den Fahrer, und
2. das Fahrpedal befindet sich in Nullstellung, und
3. die gemessene aktuelle Ist-Geschwindigkeit beträgt nahezu Null.

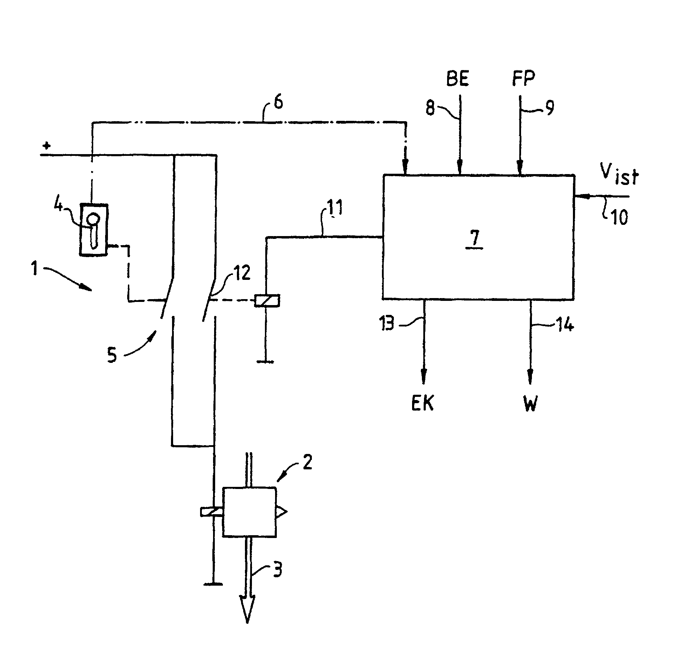

Als Steuergerät 7 kann vorzugsweise das Steuergerät des Automatgetriebes verwendet werden. Aus Gründen der Anschaulichkeit wurden hier jedoch nur die zur Verdeutlichung des Grundprinzipes der Ansteuerung der Feststellbremseinrichtung erforderlichen Ein- bzw. Ausgänge am Steuergerät angegeben. Mögliche weitere Ausgänge 13 bzw. 14 des Steuergerätes 7 können mit der Eingangskupplung EK des Automatgetriebes oder dem Wandler W gekoppelt sein. In der in der Figur dargestellten Konfiguration kann beispielsweise am Ausgang 13 zur Verbrauchsreduzierung ein Signal für das Öffnen der Eingangskupplung anliegen oder Ausgang 14 ein Signal für die Betätigung eines Stellgliedes, das ein Absenken des Wandlerdruckes zur Folge hat.

Aus Gründen der Übersichtlichkeit ist in der Figur lediglich das Prinzip der Ansteuerung der Feststellbremseinrichtung verdeutlicht. Auf die Wiedergabe möglicher weiterer Aufgaben des Steuergerätes wurde verzichtet, ebenso auf die Wiedergabe der Kopplung der einzelnen Eingänge des Steuergerätes mit den entsprechenden Einrichtungen.

Das erfindungsgemäße Verfahren bzw. die erfindungsgemäße Anfahrhilfe können bei allen Fahrzeugen mit Automatgetriebe und Feststellbremseinrichtung eingesetzt werden. Ein bevorzugtes Anwendungsgebiet bietet jedoch der Einsatz in Bussen.

## Patentansprüche

1. Verfahren zum Betreiben eines Fahrzeuges, umfassend eine Betriebsbremseinrichtung, eine Feststellbremseinrichtung und ein Automatikgetriebe, insbesondere während des Anfahrvorganges;
1.1 bei dem die Feststellbremseinrichtung durch Fuß- oder Handbetätigung einer Einrichtung (4) aktivierbar ist und die Betätigung als eine erste Eingangsgröße einem Steuergerät (7) zuführbar ist;
1.2 bei dem die aktuelle Fahrgeschwindigkeit vᵢₛₜ ständig gemessen wird und als ein zweites Eingangssignal dem Steuergerät (7) zuführbar ist;
1.3 bei dem die Stellung des Fahrpedals (FP) ermittelbar ist und als ein drittes Eingangssignal dem Steuergerät (7) zuführbar ist;
1.4 bei welchem die Betätigung der Betriebsbremseinrichtung ermittelt wird und als weiteres Eingangssignal dem Steuergerät zugeführt wird.
1.5 bei dem bei Vorliegen folgender Bedingungen
a) die aktuelle Fahrgeschwindigkeit vᵢₛₜ ist sehr klein und
b) die Feststellbremseinrichtung oder die Betriebsbremseinrichtung sind betätigt und
c) Fahrpedal (FP) in Nullstellung
die Feststellbremseinrichtung automatisch über das Steuergerät (7) aktivierbar und bei Fehlen einer der Bedingungen automatisch deaktivierbar ist; **gekennzeichnet durch** das folgende Merkmal:
1.6 die Deaktivierung der Feststellbremseinrichtung erfolgt **durch** eine gewählte Verzögerungszeit zeitlich verzögert zur Lösung der letzten Bremseinrichtung, welche **durch** den Fahrer betätigt worden ist.

2. Verfahren nach Anspruch 1, **dadurch gekennzeichnet, daß** bei Aktivierung der Feststellbremseinrichtung über das Steuergerät (7) zusätzliche Maßnahmen zur Verbrauchsreduzierung durchgeführt werden.

3. Verfahren nach Anspruch 2, **dadurch gekennzeichnet, daß** die Eingangskupplung (EK) des Automatgetriebes geöffnet wird.

4. Verfahren nach Anspruch 2, **dadurch gekennzeichnet, daß** der Druck im hydrodynamischen Wandler (W) gesenkt wird.

5. Verfahren nach einem der Ansprüche 1 bis 4, **dadurch gekennzeichnet, daß** die Deaktivierung nach Aktivierung der Feststellbremseinrichtung bei Vergrößerung der Fahrgeschwindigkeit erst bei einer Fahrgeschwindigkeit von vᵢₛₜ > 2 km/h erfolgt.

6. Verfahren nach einem der Ansprüche 1 bis 5, **dadurch gekennzeichnet, daß** die Verzögerungszeit zwischen 0,2 bis 2 s beträgt.

7. Anfahrhilfsvorrichtung für Fahrzeuge mit einer Betriebsbremseinrichtung (BE), einer Feststellbremseinrichtung (1) und einem Automatgetriebe;
7.1 die Feststellbremseinrichtung (1) umfaßt ein mit Hand oder mit Fuß betätigbares Stellelement (4) zur Vorgabe einer Stellgröße, das über ein Stellglied (2) an den einzelnen Rädern des Fahrzeuges wirksam wird;
7.2 es ist ein Steuergerät (7) vorgesehen;
7.3 das Steuergerät (7) weist wenigstens vier Eingänge auf
- ein erster Eingang (6) ist mit dem Steilelement (4) der Feststelibremseinrichtung gekoppelt;
- ein zweiter Eingang (10) ist mit einer Meßeinrichtung zum Erfassen der aktuellen Ist-Geschwindigkeit vᵢₛₜ gekoppelt;
- ein dritter Eingang (9) ist mit einem Fußpedal (FP) gekoppelt;
- ein vierter Eingang (8) ist mit der Betriebsbremseinrichtung (BE) gekoppelt;
7.4 das Steuergerät weist wenigstens einen Ausgang auf;
7.5 ein Ausgang (11) des Steuergerätes (7) ist mit dem Stellglied (2) der Feststellbremseinrichtung (1) koppelbar, wobei die Kopplung unabhängig zur Verbindung des Stellgliedes (2) mit dem Stellelement (4) erfolgt; **gekennzeichnet durch** das folgende Merkmal;
7.6 die Dekativierung der Feststellbremse mittels des Steuergerätes erfolgt **durch** eine gewählte Verzögerungszeit zeitlich verzögert zur Lösung der letzten Bremseinrichtung, welche **durch** den Fahrer betätigt worden ist.

8. Anfahrhilfsvorrichtung nach Anspruch 7, **dadurch gekennzeichnet, daß** die Kopplung des Steuergerätes (7) mit dem Stellglied (2) über einen zur Verbindung (5) zwischen Stellelement (4) und Stellglied (2) parallel zuschaltbaren Kontakt (12) erfolgt.

9. Anfahrhilfsvorrichtung nach einem der Ansprüche 7 oder 8, **dadurch gekennzeichnet, daß** als Steuergerät (7) das Steuergerät des Automatgetriebes verwendet wird.

10. Anfahrhilfsvorrichtung nach einem der Ansprüche 7 bis 9, **dadurch gekennzeichnet, daß** das Steuergerät (7) einen weiteren Ausgang (13) aufweist, der mit der Eingangskupplung (EK) des Automatgetriebes gekoppelt ist.

11. Anfahrhilfsvorrichtung nach einem der Ansprüche 7 bis 9, **dadurch gekennzeichnet, daß** das Steuergerät (7) einen weiteren Ausgang (14) aufweist, der mit dem Wandler (W) gekoppelt ist.

## Claims

1. A method for operating a vehicle, comprising a service brake device, a parking brake device and an automatic gear, especially during the starting process;
1.1 in which the parking brake device can be activated by foot or hand actuation of a device (4) and the actuation can be supplied as a first input variable to a control device (7);
1.2 in which the current driving speed Vᵢₛₜ is measured continually and can be supplied as a second input signal to the control device (7);
1.3 in which the position of the accelerator pedal (FP) can be determined and can be supplied as a third input signal to the control device (7);
1.4 in which the actuation of the service brake device is determined and is supplied as a further input signal to the control device;
1.5 in which under the presence of the following conditions
a) the current driving speed Vᵢₛₜ is very low and
b) the parking brake device or the service brake device has been actuated and
c) the accelerator pedal (FP) is in the zero position
the parking brake device can be activated automatically via the control device (7) and can be deactivated automatically upon the lack of any of the conditions;
**characterized by** the following feature:
1.6 the deactivation of the parking brake device occurs by a chosen delay time in a temporally delayed fashion for releasing the last braking device which was actuated by the driver.

2. A method as claimed in claim 1, **characterized in that** upon activation of the parking brake device via the control device (7) additional measures for reducing consumption are performed.

3. A method as claimed in claim 2, **characterized in that** the input clutch (EK) of the automatic gear is opened.

4. A method as claimed in claim 2, **characterized in that** the pressure in the hydrodynamic converter (W) is lowered.

5. A method as claimed in one of the claims 1 to 4, **characterized in that** the deactivation occurs after the activation of the parking brake device only from a driving speed of Vᵢₛₜ > 2 k.p.h. at an increase of the driving speed.

6. A method as claimed in one of the claims 1 to 5, **characterized in that** the delay time is between 0.2 and 2 seconds.

7. An auxiliary starting apparatus for vehicles with a service brake device (BE), a parking brake device (1) and an automatic gear;
7.1 with the parking brake device (1) comprising an actuating member (4) which can be actuated by hand or by foot for predetermining a manipulating variable which becomes effective on the individual wheels of the vehicle via an actuator (2);
7.2 with a control device (7) being provided;
7.3 with the control device (7) having at least four inputs,
- a first input (6) is coupled with the actuating member (4) of the parking brake device;
- a second input (10) is coupled with a measuring device for detecting the current actual speed Vᵢₛₜ;
- a third input (9) is coupled with an accelerator pedal (FP);
- a fourth input (8) is coupled with the service brake device (BE);
7.4 with the control device having at least one output;
7.5 with the output (11) of the control device (7) being capable of being coupled with the actuator (2) of the parking brake device (1), with the coupling occurring independently of the connection of the actuator (2) with the actuating member (4); **characterized by** the following feature:
7.6 the deactivation of the parking brake by means of the control device occurs by a chosen delay time in a temporally delayed fashion for releasing the last braking device which was actuated by the driver.

8. An auxiliary starting apparatus as claimed in claim 7, **characterized in that** the coupling of the control device (7) with the actuator (2) occurs by way of a contact (12) which can be switched in parallel for the connection (5) between the actuating member (4) and the actuator (2).

9. An auxiliary starting apparatus as claimed in one of the claims 7 or 8, **characterized in that** the control device of the automatic gear is used as the control device (7).

10. An auxiliary starting apparatus as claimed in one of the claims 7 to 9, **characterized in that** the control device (7) comprises a further output (13) which is coupled with the input clutch (EK) of the automatic gear.

11. An auxiliary starting apparatus as claimed in one of the claims 7 to 9, **characterized in that** the control device (7) comprises a further output which is coupled with the converter (W).

## Revendications

1. Procédé pour l'exploitation d'un véhicule, comprenant un système de frein de service, un système de frein de stationnement et une boîte automatique, en particulier pendant l'opération de démarrage;
1.1 avec lequel le système de frein de stationnement peut être activé par l'actionnement au pied ou à la main d'un dispositif (4) et l'actionnement peut arriver à un appareil de commande (7) sous la forme d'une première grandeur d'entrée;
1.1 avec lequel la vitesse de déplacement Vᵢₛₜ actuelle est constamment mesurée et peut être amenée à l'appareil de commande (7) sous la forme d'un second signal d'entrée ;
1.3 avec lequel la position de la pédale d'accélérateur (FP) peut être calculée et envoyée à l'appareil de commande (7) sous la forme d'un troisième signal d'entrée;
1.4 avec lequel l'actionnement du système de frein de service est calculé et est amené à l'appareil de commande sous la forme d'un autre signal d'entrée.
1.5 avec lequel, si l'on dispose des conditions suivantes
a) la vitesse de déplacement Vᵢₛₜ actuelle est très faible et
b) le système de frein de stationnement ou le système de frein de service sont actionnés et
c) la pédale d'accélérateur (FP) est en position 0
le système de frein de stationnement peut être activé automatiquement par l'appareil de commande (7) et peut être désactivé automatiquement s'il manque l'une des conditions;
**caractérisé par** la caractéristique suivante :
1.6 La désactivation du système de frein de stationnement s'effectue par une temporisation choisie retardée dans le temps pour le desserrage du demier système de frein qui a été actionné par le conducteur.

2. Procédé selon la revendication 1, **caractérisé en ce que** des mesures supplémentaires pour réduire la consommation sont appliquées en cas d'activation du système de frein de stationnement au moyen de l'appareil de commande (7).

3. Procédé selon la revendication 2, **caractérisé en ce que** le couplage d'entrée (EK) de la boîte automatique est ouvert.

4. Procédé selon la revendication 2, **caractérisé en ce que** la pression dans le convertisseur (W) hydrodynamique est abaissé.

5. Procédé selon l'une quelconque des revendications 1 à 4, **caractérisé en ce que** la désactivation n'intervient qu'avec une vitesse de déplacement Vᵢₛₜ supérieure à 2 km/h après l'activation du système de frein de stationnement en cas d'augmentation de la vitesse de déplacement.

6. Procédé selon l'une quelconque des revendications 1 à 5, **caractérisé en ce que** la temporisation est comprise entre 0,2 et 2 secondes.

7. Dispositif auxiliaire de démarrage pour les véhicules équipés d'un système de frein de service (BE), d'un système de frein de stationnement (1) et d'une boîte automatique;
7.1 le système de frein de stationnement (1) comprend un élément de réglage (4) pouvant être actionné à la main ou au pied pour prédéfinir une grandeur de réglage qui devient actif par l'intermédiaire d'un actionneur (2) sur les différentes roues du véhicule;
7.2 il est prévu un appareil de commande (7);
7.3 l'appareil de commande (7) présente au moins quatre entrées
- une première entrée (6) est couplée avec l'élément de réglage (4) du système de frein de stationnement;
- une deuxième entrée (10) est couplée avec un appareil de mesure pour l'enregistrement de la vitesse réelle Vᵢₛₜ actuelle;
- une troisième entrée (9) est couplée avec une pédale (FP);
- une quatrième entrée (8) est couplée avec le système de frein de service (BE)
7.4 l'appareil de commande présente au moins une sortie;
7.5 une sortie (11) de l'appareil de commande (7) peut être couplée avec l'actionneur (2) du système de frein de stationnement, le couplage s'effectuant indépendamment de la liaison de l'actionneur (2) avec l'élément de réglage (4); **caractérisé par** la caractéristique suivante :
7.6 la désactivation du frein de stationnement au moyen de l'appareil de commande s'effectue par une temporisation choisie retardée dans le temps pour le desserrage du demier système de frein qui a été actionné par le conducteur.

8. Dispositif auxiliaire de démarrage selon la revendication 7, **caractérisé en ce que** le couplage de l'appareil de commande (7) avec l'actionneur (2) s'effectue au moyen d'un contact (12) pouvant être connecté en parallèle avec la liaison (5) entre l'élément de réglage (4) et l'actionneur (2).

9. Dispositif auxiliaire de démarrage selon l'une quelconque des revendications 7 ou 8, **caractérisé en ce que** l'appareil de commande de la boîte automatique est utilisé comme appareil de commande (7).

10. Dispositif auxiliaire de démarrage selon l'une quelconque des revendications 7 à 9, **caractérisé en ce que** l'appareil de commande (7) présente une autre sortie (13), qui est couplée avec le couplage d'entrée (EK) de la boîte automatique.

11. Dispositif auxiliaire de démarrage selon l'une quelconque des revendications 7 à 9, **caractérisé en ce que** l'appareil de commande (7) présente une autre sortie (14) qui est couplée avec le convertisseur (W).
